# EUROPEAN PATENT APPLICATION

(11) **EP 4 722 950 A1**
(43) Date of publication of application: **08.04.2026**
(21) Application number: 25190970.1
(22) Date of filing: 22.07.2025
(51) Int. Cl.: G06F 21/10, G06F 8/61

(54) **IMAGE FORMING APPARATUS**

(30) Priority: 07.10.2024 JP 2024176151
(71) Applicant: ETRIA Co., Ltd., Yokohama Kanagawa (JP)
(72) Inventor: UCHIDA, Shigeo, Yokohama (JP)
(74) Representative: J A Kemp LLP

(57) **Abstract**

An image forming apparatus according to an embodiment includes a storage device and a processor. The storage device stores firmware, an embedded application bundled in the firmware, and additional information prepared separately from the embedded application. The processor installs the firmware and the embedded application. The processor installs the embedded application after installing the firmware, and executes setting relating to the installed embedded application by referring to the additional information.

## Description

### FIELD

Embodiments described herein relate generally to an image forming apparatus disposed in a workplace.

### BACKGROUND

Conventionally, for example, embedded applications are bundled in firmware of an image forming apparatus. At a time when the firmware is installed, the embedded applications bundled in the firmware are pre-installed. The embedded applications are classified into two types, one being a type that is started by a user's operation, and the other being a type that is resident and operates on a background.

In addition, as regards paid embedded applications, there is an embedded application with a trial license, which can be used for free during a predetermined period. In the case of the embedded application with a trial license, the trial license is created at a first start time of the embedded application, and the count-down of the period of use begins.

In connection with the manufacture of the image forming apparatus, there is a time lag from the installation of the firmware to the time when a customer can actually use the image forming apparatus. Thus, at a time of installing the firmware and the embedded applications, there is a method of avoiding the start of the count-down of the period of use, by changing the start method of the embedded application with the trial license from an automatic method to a manual method.

### BRIEF DESCRIPTION OF THE DRAWINGS

FIG. 1 is a diagram schematically illustrating a configuration example of an image forming apparatus according to an embodiment.
FIG. 2 is a diagram illustrating a configuration example of a package file of firmware of the image forming apparatus according to the embodiment.
FIG. 3 is a flowchart illustrating a flow of a process of a first operation example of the image forming apparatus according to the embodiment.
FIG. 4 is a flowchart illustrating a flow of a process of a second operation example of the image forming apparatus according to the embodiment.
FIG. 5 is a flowchart illustrating a flow of a process of a third operation example of the image forming apparatus according to the embodiment.
FIG. 6 is a flowchart illustrating a flow of a process of a fourth operation example of the image forming apparatus according to the embodiment.

### DETAILED DESCRIPTION

An image forming apparatus according to an embodiment includes a storage device and a processor. The storage device stores firmware, an embedded application bundled in the firmware, and additional information prepared separately from the embedded application. The processor installs the firmware and the embedded application. The processor installs the embedded application after installing the firmware, and executes setting relating to the installed embedded application by referring to the additional information.

Hereinafter, embodiments are described with reference to the accompanying drawings.

### (Image Forming Apparatus)

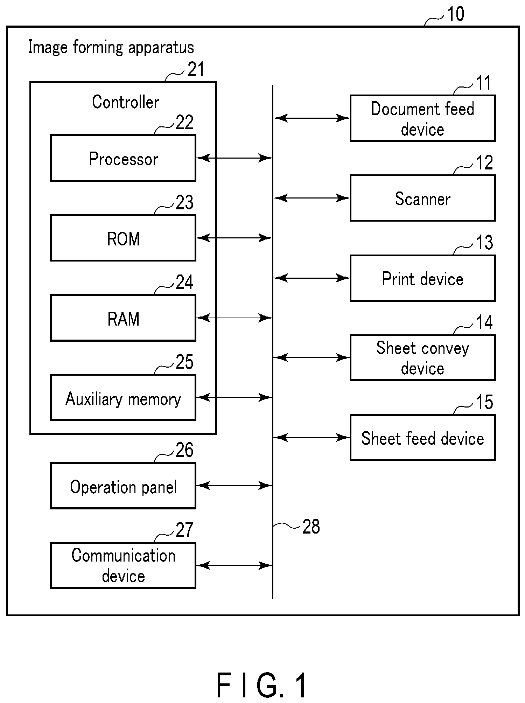

To begin with, referring to FIG. 1, an image forming apparatus 10 according to an embodiment is described. FIG. 1 is a diagram schematically illustrating a configuration example of the image forming apparatus 10 according to the embodiment.

The image forming apparatus 10 is, for example, a multifunction peripheral (MFP). The image forming apparatus 10 has a print function, a scan function, a copy function, and the like. The print function is a function of printing a toner image on a paper sheet. The scan function is a function of scanning an image from a document or the like, on which the image is formed. The copy function is a function of printing an image, which is scanned from a document or the like by using the scan function, on a paper sheet by using the print function.

The image forming apparatus 10 includes a document feed device 11, a scanner 12, a print device 13, a sheet convey device 14, a sheet feed device 15, a controller 21, an operation panel 26, a communication device 27, and a system bus 28.

The document feed device 11 is, for example, an auto document feeder (ADF). The document feed device 11 feeds a document placed on a document tray into the scanner 12.

The scanner 12 scans an image from the document. The scanner 12 includes, for example, a document glass and a scan module. The scan module scans an image from a document placed on the document glass, or from a document that is fed to the document glass by the document feed device 11. The scan module radiates illumination light on a document that is a scan target, receives reflective light by an image sensor, and converts the received light into a digital signal. Thereby, the scan module scans an image from the document. In order to scan an image from a back surface of the document, another scan module may be provided on the document feed device 11.

The sheet feed device 15 feeds a paper sheet to the sheet convey device 14. For example, the sheet feed device 15 includes at least one sheet feed cassette that stores paper sheets that are objects on which images are to be printed. In addition, the sheet feed device 15 includes a manual feed tray for manually feeding a paper sheet. The sheet feed device 15 takes out a paper sheet selectively from the sheet feed cassette or the manual feed tray, by a sheet feed roller, and feeds the paper sheet to the sheet convey device 14

The sheet convey device 14 conveys a paper sheet, which is fed from the sheet feed device 15, through the print device 13. The sheet convey device 14 includes, for example, a two-side unit that enables printing on both surfaces of a paper sheet by the print device 13. The two-side unit reverses the front and back sides of the paper sheet by switching back the paper sheet, and conveys the paper sheet through the print device 13. In addition, the sheet convey device 14 includes a sheet discharge tray that receives the paper sheet with an image printed by the print device 13.

The print device 13 prints an image on the paper sheet conveyed by the sheet convey device 14, based on image data that is supplied. The image data provided for printing is, for example, image data that is scanned from the document by the scanner 12. Alternatively, the image data is image data that is supplied to the image forming apparatus 10 from an external apparatus other than the image forming apparatus 10.

For example, the print device 13 forms a toner image on a transfer belt, and transfers the toner image onto a paper sheet, thereby printing an image on the paper sheet. Alternatively, the print device 13 prints an image on a paper sheet by jetting ink on a paper sheet by an ink jet head. Aside from these methods, the print device 13 may print an image on a paper sheet by other methods.

The operation panel 26 is a man-machine interface that inputs and outputs information between the image forming apparatus 10 and an operator of the image forming apparatus 10. The operation panel 26 includes, for example, a touch panel and an input device.

The touch panel is configured, for example, such that a display, such as a liquid crystal display or an organic EL display, and a pointing device by a touch input, are stacked. The touch panel displays a screen for notifying the operator of the image forming apparatus 10 of various kinds of information. In addition, the touch panel accepts a touch operation by the operator. In other words, the touch panel is an input/output device.

The input device accepts an operation by the operator of the image forming apparatus 10. The input device includes a keyboard, a key pad, a touch pad, and the like.

The communication device 27 includes a communication interface, for instance, a network interface card, and communicates with an external device or a cloud via a network that is constructed wiredly or wirelessly, for instance, a local area network (LAN). For example, the communication device 27 transmits image data scanned by the scanner 12 to an external device or a cloud, and receives image data, which is to be printed by the print device 13, from the external device or the cloud.

The system bus 28 is a communication path between the document feed device 11, scanner 12, print device 13, sheet convey device 14, sheet feed device 15, controller 21, operation panel 26, and communication device 27. The document feed device 11, scanner 12, print device 13, sheet convey device 14, sheet feed device 15, controller 21, operation panel 26, and communication device 27 can transmit and receive information, data, control signals, instructions, responses and the like via the system bus 28.

In order to execute various functions of the image forming apparatus 10, the controller 21 controls the document feed device 11, scanner 12, print device 13, sheet convey device 14, sheet feed device 15, operation panel 26, and communication device 27. The controller 21 includes a processor 22, a read-only memory (ROM) 23, a random access memory (RAM) 24, and an auxiliary memory 25.

The processor 22 is an arithmetic element that executes an arithmetic process. The processor 22 controls the image forming apparatus 10 in accordance with a software program stored in the ROM 23 or the auxiliary memory 25. The processor 22 includes, for example, a central processing unit (CPU), a graphical processing unit (GPU), or the like.

The ROM 23 is a nonvolatile memory that constitutes a part of a main memory. The ROM 23 non-transitorily stores a start program that is necessary for starting the image forming apparatus 10. The ROM 23 is composed of, for example, an erasable programmable read-only memory (EPROM), and stores various setting data at a start time, in addition to the start program.

The RAM 24 is a volatile memory that constitutes a part of the main memory. The RAM 24 temporarily stores a program that is necessary for the processing of the processor 22, and data that is necessary for the execution of the program. The RAM 24 functions as a working memory of the processor 22.

The auxiliary memory 25 is a nonvolatile memory such as a hard disk drive (HDD) or a solid state drive (SSD). The auxiliary memory 25 non-transitorily stores a program that the processor 22 executes, and data that is necessary for the execution of the program. Hereinafter, the program and the data necessary for the execution of the program are comprehensively referred to simply as "program". In other words, the program includes the data necessary for the execution of the program. The programs stored in the auxiliary memory 25 is supplied, for example, through non-transitory computer readable medium, network, and the like. The programs stored in the auxiliary memory 25 include firmware that controls the entirety of the image forming apparatus 10, and various embedded applications that execute various functions of the image forming apparatus 10. For example, the various embedded applications include an embedded application that executes the print function, an embedded application that executes the scan function, and an embedded application that executes the copy function.

The various embedded applications are bundled in the firmware. Specifically, the various embedded applications are stored in the auxiliary memory 25 as a single file that is integrated with the firmware. In other words, the firmware, and the various embedded applications bundled in the firmware, are packaged. The firmware and the various embedded applications are stored in the auxiliary memory 25 as a single package file. The package file is composed of, for example, a compressed file in which one or more files are compressed.

The processor 22 starts the image forming apparatus 10 by loading in the RAM 24 the start program stored in the ROM 23 and executing the start program. In addition, the processor 22 controls the entirety of the image forming apparatus 10 by loading in the RAM 24 the firmware stored in the auxiliary memory 25 and executing the firmware. Furthermore, the processor 22 executes various functions of the image forming apparatus 10, for instance, the print function, scan function, and copy function, by loading in the RAM 24 the various embedded applications stored in the auxiliary memory 25 and executing the various embedded applications.

### (Configuration Example of Package File of Firmware)

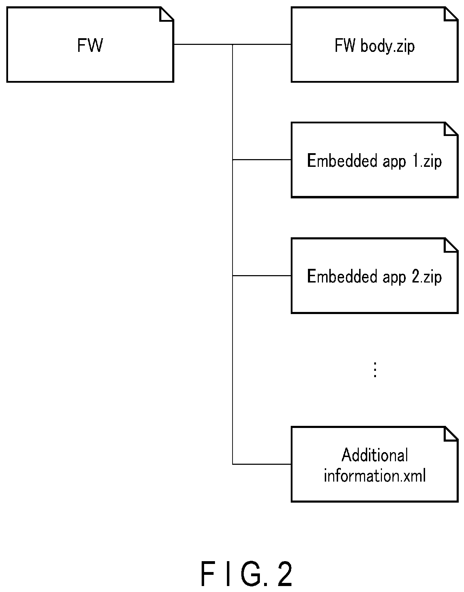

Here, referring to FIG. 2, a configuration example of a package file of firmware is described. FIG. 2 is a diagram illustrating a configuration example of the package file of the firmware. In FIG. 2, the firmware is abbreviated as "FW", and the embedded application as "embedded app".

The package file of the firmware includes a firmware body, embedded application 1, embedded application 2, ..., and a file of additional information. Each of the files of the firmware body, embedded application 1, embedded application 2, ..., is packaged. In other words, each of the files of the firmware body, embedded application 1, embedded application 2, ..., is composed of a compressed file. For example, the files of the firmware body, embedded application 1, embedded application 2, ..., are composed of zip files. On the other hand, the file of additional information is composed of an uncompressed file. For example, the file of additional information is composed of an xml file.

The additional information includes additional information relating to each of the embedded application 1, embedded application 2, .... For example, the additional information includes information of shipment of the image forming apparatus 10 in regard to each of the embedded application 1, embedded application 2, .... For example, the information of shipment includes information of a shipment destination of the image forming apparatus 10, for instance, information of an exporting country. In addition, the additional information includes, in regard to each of the embedded application 1, embedded application 2, ..., information relating to a start method, validity/invalidity, a post-installation process, and a process at a first start time, in accordance with the information of shipment.

### (First Operation Example)

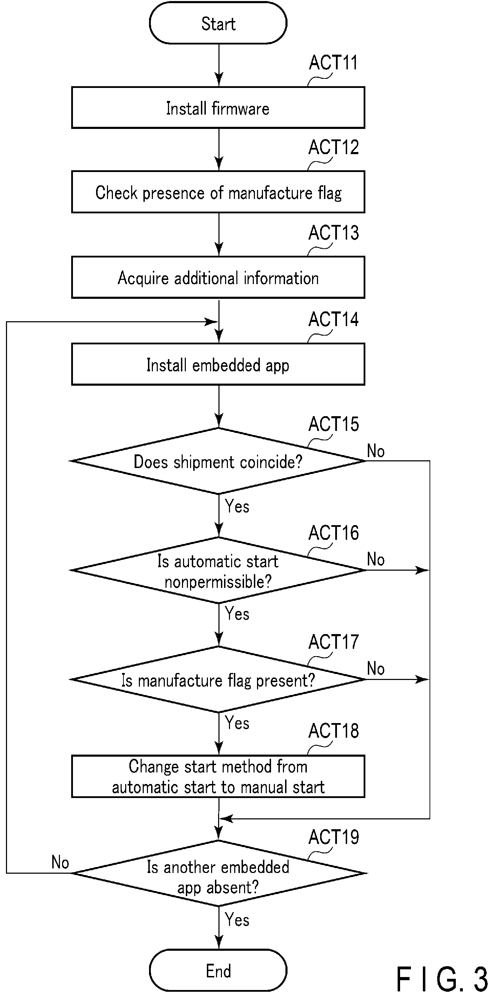

Next, referring to FIG. 3, a first operation example of the image forming apparatus 10 according to the embodiment is described. FIG. 3 is a flowchart illustrating a flow of a process of the first operation example of the image forming apparatus 10 according to the embodiment. In FIG. 3, the embedded application is abbreviated as "embedded app".

The first operation example is an example in which an embedded application is installed after firmware is installed, and a start method of the installed embedded application is set by referring to additional information.

To begin with, in ACT 11, the processor 22 installs the firmware, which is stored in the auxiliary memory 25. Here, to install the firmware means to load the firmware in the RAM 24 and to set the firmware in an executable state. Specifically, the processor 22 decompresses the compressed file (FW body.zip) of the firmware body illustrated in FIG. 2, and loads the decompressed file in the RAM 24.

Next, in ACT 12, the processor 22 checks the presence of a manufacture flag. It is conceivable that the installation of the firmware and the embedded application bundled in the firmware is either installation at a time of manufacture or installation on the market. The manufacture flag is an index indicating the installation at the time of manufacture. Specifically, if the manufacture flag is present, this means the installation at the time of manufacture, and if the manufacture is absent, this means the installation on the market. For example, a manufacture flag is set within the ROM 23. The presence or absence of the manufacture flag corresponds to binary information of the manufacture flag. During the image forming apparatus 10 is manufactured, the manufacture flag holds a value indicating presence. After the apparatus is shipped, the manufacture flag is set to a value indicating absence.

In general, the installation of the firmware and the embedded applications at the time of manufacture is, in many cases, the installation of the original firmware and embedded applications, but is, in some cases, the installation of the updated firmware and embedded applications. In addition, the installation of the firmware and the embedded applications on the market is, in many cases, the installation of the updated firmware and embedded applications, but is, in some cases, the installation of the original firmware and embedded applications.

Next, in ACT 13, the processor 22 opens the file of additional information (additional information.xml), and acquires additional information of each embedded application. The additional information includes information of shipment of the image forming apparatus 10, and information of a start method of each embedded application. In the present operation example, the start method of the embedded application is set to either an automatic start or a manual start, with the automatic start being set by default.

Subsequently, in ACT 14, the processor 22 installs an embedded application, which is stored in the auxiliary memory 25. Here, to install the embedded application means to load the embedded application in the RAM 24 and to set the embedded application in an executable state. Specifically, the processor 22 decompresses one of the compressed files (for example, embedded app 1.zip) of the embedded applications illustrated in FIG. 2, and loads the decompressed file in the RAM 24.

Next, in ACT 15, the processor 22 refers to the additional information, and determines whether the information of the shipment of the image forming apparatus coincides with the information of shipment of the embedded application described in the additional information. If the information of the shipment coincides (ACT 15: Yes), the process advances to ACT 16. If the information of the shipment does not coincide (ACT 15: No), the process advances to ACT 19.

If the information of the shipment coincides (ACT 15: Yes), the processor 22, in ACT 16, refers to the additional information and determines whether the automatic start of the installed embedded application is nonpermissible. If the automatic start is nonpermissible (ACT 16: Yes), the process advances to ACT 17. If the automatic start is permissible (ACT 16: No), the process advances to ACT 19.

If the automatic start of the embedded application is nonpermissible (ACT 16: Yes), the processor 22 determines, ACT 17, whether the manufacture flag is present. If the manufacture flag is present (ACT 17: Yes), the process advances to ACT 18, and if the manufacture flag is not present (ACT 17: No), the process advances to ACT 19.

In the case of the installation on the market, even in the case where the automatic start is nonpermissible, the automatic start is maintained without changing to the manual start. This aims at avoiding the disabling of the start of the embedded application at the time when the updated firmware is installed.

If the manufacture flag is present (ACT 17: Yes), the processor 22 changes, in ACT 18, the start method of the installed embedded application from the automatic start to the manual start.

Thereby, the installed embedded application is not started until the start method is changed from the manual start to the automatic start. Thus, in the case where the installed embedded application is an embedded application with a trial license, the period of use of the trial license is prevented from being undesiredly shortened.

Note that the start method of the installed embedded application is changeable after the installation, for example, through a web browser according to the specifications of the embedded application.

After the process of ACT 18, or in a case where the information of shipment does not coincide as the result of the determination of ACT 15 (ACT 15: No), or in a case where the automatic start is permitted as the result of the determination of ACT 16 (ACT 16: No), or in a case where the manufacture flag is not present as the result of the determination of ACT 17 (ACT 17: No), the processor 22 determines, in ACT 19, whether another embedded application that is not installed is absent in the package file of the firmware, for example, illustrated in FIG. 2.

If another embedded application that is not installed is present (ACT 19: No), the process returns to ACT 14, and the installation of the another embedded application and the series of processes following the installation are executed (ACT 15 to ACT 18). Thereby, the installation and the setting of the start method are executed for all embedded applications bundled in the firmware.

If another embedded application that is not installed is absent (ACT 19: Yes), the process is terminated.

According to the above-described first operation example, the start method for each embedded application can be set in accordance with each of shipments, without changing the package file of the embedded applications. Thereby, for example, it is possible to prevent undesired shortening of the period of use of the trial license of the embedded application.

### (Second Operation Example)

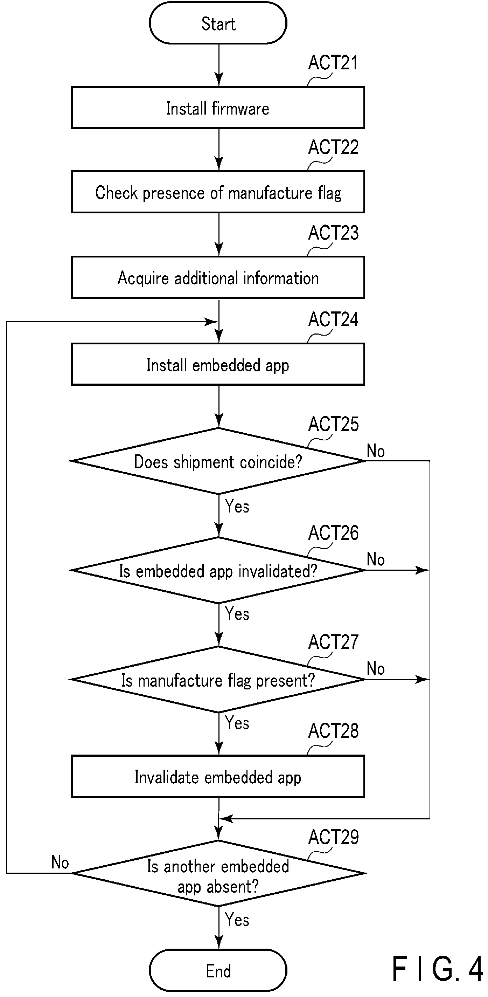

Next, referring to FIG. 4, a second operation example of the image forming apparatus 10 according to the embodiment is described. FIG. 4 is a flowchart illustrating a flow of a process of the second operation example of the image forming apparatus 10 according to the embodiment. In FIG. 4, the embedded application is abbreviated as "embedded app".

The second operation example is an example in which an embedded application is installed after the firmware is installed, and the setting of validity/invalidity of the installed embedded application is performed by referring to additional information. In the setting of validation, the use of the embedded application is permitted. In the setting of invalidation, the use of the embedded application is not permitted.

The second operation example is partly different from the first operation example, and includes many common parts. Thus, hereinafter, different parts are mainly described, and common parts are briefly described.

To begin with, in ACT 21, the processor 22 installs the firmware, which is stored in the auxiliary memory 25.

Next, in ACT 22, the processor 22 checks the presence of a manufacture flag.

Then, in ACT 23, the processor 22 opens the file of additional information, and acquires additional information of each embedded application. The additional information includes information of shipment of the image forming apparatus 10, and information of the setting of validity/invalidity of each embedded application. In the present operation example, the setting of validity/invalidity of each embedded application is set to "valid" by default.

Subsequently, in ACT 24, the processor 22 installs an embedded application, which is stored in the auxiliary memory 25.

Next, in ACT 25, the processor 22 refers to the additional information, and determines whether the information of the shipment of the image forming apparatus coincides with the information of shipment of the embedded application described in the additional information.

If the information of the shipment coincides (ACT 25: Yes), the processor 22, in ACT 26, refers to the additional information and determines whether the setting of validity/invalidity of the installed embedded application is set to be "invalid".

If the embedded application is invalidated (ACT 26: Yes), the processor 22 determines, in ACT 27, whether the manufacture flag is present. If the manufacture flag is present (ACT 27: Yes), the process advances to ACT 28, and if the manufacture flag is not present (ACT 27: No), the process advances to ACT 29.

If the manufacture flag is present (ACT 27: Yes), the processor 22 changes, in ACT 28, the setting of validity/invalidity of the installed embedded application from "valid" to "invalid". As a result, the installed embedded application becomes unavailable.

Thereby, the installed embedded application remains unavailable until the setting of validity/invalidity is changed from "invalid" to "valid". In other words, the installed embedded application is not started until that time. Thus, in a case where the installed embedded application is an embedded application with a trial license, it is possible to prevent undesired shortening of the period of time of the trial license.

Note that the setting of validity/invalidity of the installed embedded application is changeable after the installation, for example, through a web browser according to the specifications of the embedded application.

After the process of ACT 28, or in a case where the information of shipment does not coincide as the result of the determination of ACT 25 (ACT 25: No), or in a case where the embedded application is not invalidated as the result of the determination of ACT 26 (ACT 26: No), or in a case where the manufacture flag is not present as the result of the determination of ACT 27 (ACT 27: No), the processor 22 determines, in ACT 29, whether another embedded application that is not installed is absent in the package file of the firmware, for example, illustrated in FIG. 2.

If another embedded application that is not installed is present (ACT 29: No), the process returns to ACT 24, and the installation of the another embedded application and the series of processes following the installation are executed (ACT 25 to ACT 28). Thereby, the installation and the setting of validity/invalidity are executed for all embedded applications bundled in the firmware.

If another embedded application that is not installed is absent (ACT 29: Yes), the process is terminated.

According to the above-described second operation example, the validity/invalidity of each embedded application can be set in accordance with each of shipments, without changing the package file of the embedded applications. Thereby, for example, it is possible to prevent undesired shortening of the period of use of the trial license of the embedded application.

### (Third Operation Example)

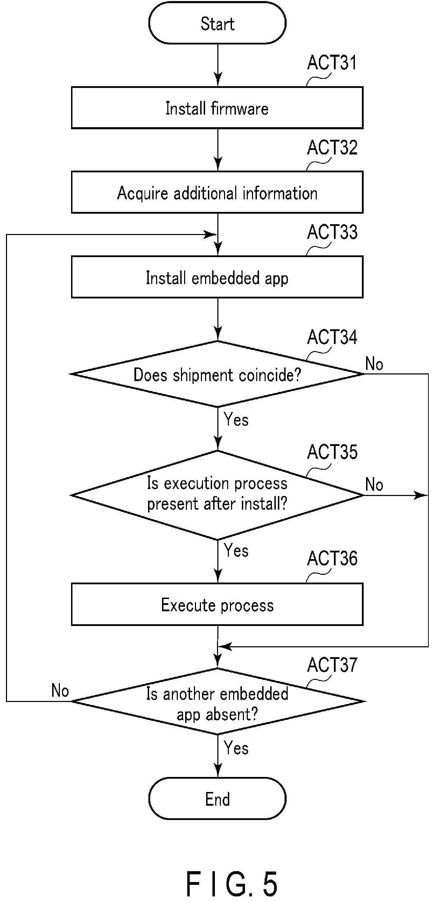

Next, referring to FIG. 5, a third operation example of the image forming apparatus 10 according to the embodiment is described. FIG. 5 is a flowchart illustrating a flow of a process of the third operation example of the image forming apparatus 10 according to the embodiment. In FIG. 5, the embedded application is abbreviated as "embedded app".

The third operation example is an example in which an embedded application is installed after the firmware is installed, and a preset process is executed after the embedded application is installed, by referring to additional information. In the third operation example, the installation on the market is presupposed.

The third operation example is partly different from the first operation example, and includes many common parts. Thus, hereinafter, different parts are mainly described, and common parts are briefly described.

To begin with, in ACT 31, the processor 22 installs the firmware, which is stored in the auxiliary memory 25.

Next, in ACT 32, the processor 22 opens the file of additional information, and acquires additional information of each embedded application. The additional information includes information of shipment of the image forming apparatus 10, and information of a process that is to be executed after the installation of each embedded application.

For example, the process to be executed includes execution of an execution file or execution of a function, and the information of the process to be executed includes an execution file name or a function name. Here, the description is given on the assumption that the process to be executed is the execution of an execution file or the execution of a function.

Subsequently, in ACT 33, the processor 22 installs an embedded application, which is stored in the auxiliary memory 25.

Next, in ACT 34, the processor 22 refers to the additional information, and determines whether the information of the shipment of the image forming apparatus coincides with the information of shipment of the embedded application described in the additional information.

If the information of the shipment coincides (ACT 34: Yes), the processor 22, in ACT 35, refers to the additional information and determines whether a process to be executed after the installation of the installed embedded application is present.

For example, if the information of the process to be executed, acquired in ACT 32, includes an execution file name or a function name, the processor 22 determines that the process to be executed is present, and if the information of the process to be executed does not include an execution file name or a function name, the processor 22 determines that the process to be executed is not present. If the process to be executed is present (ACT 35: Yes), the processor 22 executes, in ACT 36, the execution file of the execution file name or the function of the function name.

After the process of ACT 36, or in a case where the information of shipment does not coincide as the result of the determination of ACT 34 (ACT 34: No), or in a case where the process to be executed is not present as the result of the determination of ACT 35 (ACT 35: No), the processor 22 determines, in ACT 37, whether another embedded application that is not installed is absent in the package file of the firmware, for example, illustrated in FIG. 2.

If another embedded application that is not installed is present (ACT 37: No), the process returns to ACT 33, and the installation of the another embedded application and the series of processes following the installation are executed (ACT 34 to ACT 36). Thereby, the installation and the execution of an appropriate process after the installation are executed for all embedded applications bundled in the firmware.

If another embedded application that is not installed is absent (ACT 37: Yes), the process is terminated.

According to the above-described third operation example, the installation of the embedded application and the execution of an appropriate process after the installation are executed.

The third operation example may be combined with the above-described first operation example or second operation example.

### (Fourth Operation Example)

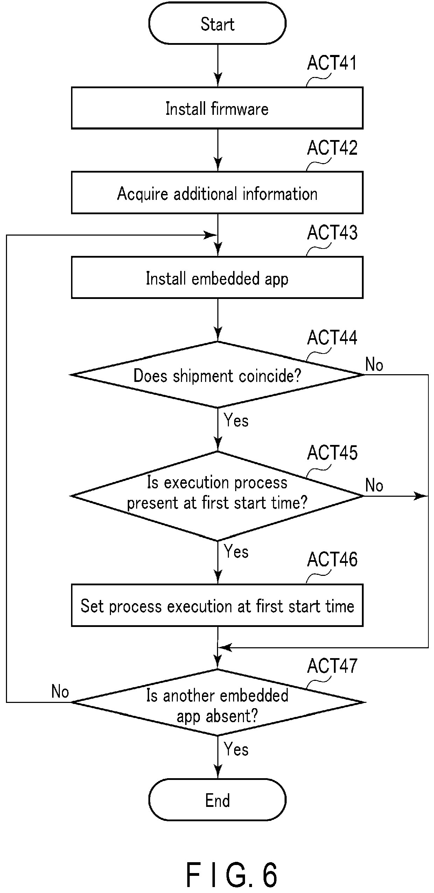

Next, referring to FIG. 6, a fourth operation example of the image forming apparatus 10 according to the embodiment is described. FIG. 6 is a flowchart illustrating a flow of a process of the fourth operation example of the image forming apparatus 10 according to the embodiment. In FIG. 6, the embedded application is abbreviated as "embedded app".

The fourth operation example is an example in which an embedded application is installed after the firmware is installed, and setting of a process to be executed at a first start time of the installed embedded application is performed by referring to additional information. In the fourth operation example, the installation on the market is presupposed.

The fourth operation example is partly different from the first operation example, and includes many common parts. Thus, hereinafter, different parts are mainly described, and common parts are briefly described.

To begin with, in ACT 41, the processor 22 installs the firmware, which is stored in the auxiliary memory 25.

Next, in ACT 42, the processor 22 opens the file of additional information, and acquires additional information of each embedded application. The additional information includes information of shipment of the image forming apparatus 10, and information of a process that is to be executed at a first start time of each embedded application.

For example, the process to be executed includes execution of an execution file or execution of a function, and the information of the process to be executed includes an execution file name or a function name. Here, the description is given on the assumption that the process to be executed is the execution of an execution file or the execution of a function.

Subsequently, in ACT 43, the processor 22 installs an embedded application, which is stored in the auxiliary memory 25.

Next, in ACT 44, the processor 22 refers to the additional information, and determines whether the information of the shipment of the image forming apparatus coincides with the information of shipment of the embedded application described in the additional information.

If the information of the shipment coincides (ACT 44: Yes), the processor 22, in ACT 45, refers to the additional information and determines whether a process to be executed at a first start time of the installed embedded application is present.

For example, if the information of the process to be executed, acquired in ACT 42, includes an execution file name or a function name, the processor 22 determines that the process to be executed is present, and if the information of the process to be executed does not include an execution file name or a function name, the processor 22 determines that the process to be executed is not present.

If the process to be executed is present (ACT 45: Yes), the processor 22 registers, in ACT 46, the execution file name or the function name as the information of the process to be executed at the first start time of the installed embedded application.

After the process of ACT 46, or in a case where the information of shipment does not coincide as the result of the determination of ACT 44 (ACT 44: No), or in a case where the process to be executed at the first start time of the installed embedded application is not present as the result of the determination of ACT 45 (ACT 45: No), the processor 22 determines, in ACT 47, whether another embedded application that is not installed is absent in the package file of the firmware, for example, illustrated in FIG. 2.

If another embedded application that is not installed is present (ACT 47: No), the process returns to ACT 43, and the installation of the another embedded application and the series of processes following the installation are executed (ACT 44 to ACT 46). Thereby, the installation and the setting of the process to be executed at the first start time are executed for all embedded applications bundled in the firmware.

If another embedded application that is not installed is absent (ACT 47: Yes), the process is terminated.

According to the above-described fourth operation example, the installation of the embedded application and the setting of the process at the first start time of the installed embedded application are executed.

At a later date, at the first start time of the embedded application, the processor 22 executes the process set in ACT 46, i.e., the execution file of the registered execution file name or the function of the registered function name.

The fourth operation example may be combined with the above-described first operation example or second operation example.

### (Advantageous Effects)

As has been described above, according to the image forming apparatus of the embodiment, the setting relating to an embedded application can be changed after the installation of the embedded application. Furthermore, the change of the setting relating to the embedded application can be executed in accordance with each of shipments, without changing the package of the embedded application.

In other words, the behavior of the embedded application after the installation can be controlled without changing the package of the embedded application.

Note that in the above-described operation examples, in a case where the change in accordance with each of shipments is needless, the process of determination of shipment may be omitted.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An image forming apparatus comprising:
a storage device storing firmware, an embedded application bundled in the firmware, and additional information prepared separately from the embedded application; and
a processor configured to install the firmware and the embedded application,
the processor being configured to install the embedded application after installing the firmware, and to execute setting relating to the installed embedded application by referring to the additional information.

2. The image forming apparatus of claim 1, wherein the additional information is information relating to shipment.

3. The image forming apparatus of claim 2, wherein
the additional information is information relating to a start method of the embedded application, and
the processor is configured to set the start method of the embedded application in accordance with each of the shipments.

4. The image forming apparatus of claim 3, wherein
the processor is configured to set the start method of the embedded application in accordance with whether installation of the embedded application is performed at a time of manufacture or on the market.

5. The image forming apparatus of claim 4, wherein
the start method of the embedded application is set to either an automatic start or a manual start, with the automatic start being set by default,
when the shipment of the image forming apparatus coincides with the shipment of the embedded application, the automatic start of the embedded application is nonpermissible in accordance with the additional information, and the installation of the embedded application is performed at the time of manufacture, the processor is configured to change the start method of the installed embedded application from the automatic start to the manual start.

6. The image forming apparatus of claim 2, wherein
the additional information is information relating to validity/invalidity of the embedded application, and
the processor is configured to execute setting of the validity/invalidity of the embedded application in accordance with each of the shipments.

7. The image forming apparatus of claim 6, wherein
the processor is configured to execute setting of the validity/invalidity of the embedded application in accordance with whether installation of the embedded application is performed at a time of manufacture or on the market.

8. The image forming apparatus of claim 7, wherein
the setting of validity/invalidity of the embedded application is set to "valid" by default,
when the shipment of the image forming apparatus coincides with the shipment of the embedded application, the embedded application is invalidated in accordance with the the additional information, and the installation of the embedded application is performed at the time of manufacture, the processor is configured to change the setting of validity/invalidity of the installed embedded application from "valid" to "invalid".

9. The image forming apparatus of claim 2, wherein
the additional information is information relating to a process that is to be executed after the embedded application is installed, and
the processor is configured to execute the process after the embedded application is installed, in accordance with each of the shipments.

10. The image forming apparatus of claim 9, wherein
when the shipment of the image forming apparatus coincides with the shipment of the embedded application, and the process to be executed is present in accordance with the the additional information, the processor is configured to execute the process to be executed.

11. The image forming apparatus of claim 2, wherein
the additional information is information relating to a process that is to be executed at a first start time of the embedded application, and
the processor is configured to set execution of the process at the first start time of the embedded application, in accordance with each of the shipments.

12. The image forming apparatus of claim 11, wherein
when the shipment of the image forming apparatus coincides with the shipment of the embedded application, and the process to be executed is present in accordance with the the additional information, the processor is configured to execute the process to be executed.

## Amended claims

### Amended claims in accordance with Rule 137(2) EPC.

1. An image forming apparatus (10) comprising:
a storage device storing firmware, an embedded application bundled in the firmware, and additional information prepared separately from the embedded application; and
a processor (22) configured to install the firmware and the embedded application,
the processor being configured to install the embedded application after installing the firmware, and to execute setting relating to the installed embedded application by referring to the additional information, wherein
the additional information is information relating to shipment of the image forming apparatus (10).

2. The image forming apparatus of claim 1, wherein
the additional information further comprises information relating to a start method of the embedded application, and
the processor is configured to set the start method of the embedded application in accordance with each of the shipments.

3. The image forming apparatus of claim 2, wherein
the processor is configured to set the start method of the embedded application in accordance with whether installation of the embedded application is performed at a time of manufacture or on the market.

4. The image forming apparatus of claim 3, wherein
the start method of the embedded application is set to either an automatic start or a manual start, with the automatic start being set by default,
when the shipment of the image forming apparatus coincides with the shipment of the embedded application, the automatic start of the embedded application is nonpermissible in accordance with the additional information, and the installation of the embedded application is performed at the time of manufacture, the processor is configured to change the start method of the installed embedded application from the automatic start to the manual start.

5. The image forming apparatus of claim 1, wherein
the additional information is information relating to validity/invalidity of the embedded application, and
the processor is configured to execute setting of the validity/invalidity of the embedded application in accordance with each of the shipments.

6. The image forming apparatus of claim 5, wherein
the processor is configured to execute setting of the validity/invalidity of the embedded application in accordance with whether installation of the embedded application is performed at a time of manufacture or on the market.

7. The image forming apparatus of claim 6, wherein
the setting of validity/invalidity of the embedded application is set to "valid" by default,
when the shipment of the image forming apparatus coincides with the shipment of the embedded application, the embedded application is invalidated in accordance with the additional information, and the installation of the embedded application is performed at the time of manufacture, the processor is configured to change the setting of validity/invalidity of the installed embedded application from "valid" to "invalid".

8. The image forming apparatus of claim 1, wherein
the additional information is information relating to a process that is to be executed after the embedded application is installed, and
the processor is configured to execute the process after the embedded application is installed, in accordance with each of the shipments.

9. The image forming apparatus of claim 8, wherein
when the shipment of the image forming apparatus coincides with the shipment of the embedded application, and the process to be executed is present in accordance with the additional information, the processor is configured to execute the process to be executed.

10. The image forming apparatus of claim 1, wherein
the additional information is information relating to a process that is to be executed at a first start time of the embedded application, and
the processor is configured to set execution of the process at the first start time of the embedded application, in accordance with each of the shipments.

11. The image forming apparatus of claim 10, wherein
when the shipment of the image forming apparatus coincides with the shipment of the embedded application, and the process to be executed is present in accordance with the additional information, the processor is configured to execute the process to be executed.
